Europäisches Patentamt

European Patent Office

Office européen des brevets

(11) Numéro de publication : **0 410 855 B1**

## (12) FASCICULE DE BREVET EUROPEEN

(45) Date de publication du fascicule du brevet :
**08.04.92 Bulletin 92/15**

(51) Int. Cl.$^5$ : **F16L 5/02**

(21) Numéro de dépôt : **90402090.6**

(22) Date de dépôt : **20.07.90**

(54) **Dispositif d'ancrage dans un trou lisse d'une paroi accessible d'un seul côté, et presse-étoupe comportant un tel dispositif.**

(30) Priorité : **28.07.89 FR 8910213**

(43) Date de publication de la demande :
**30.01.91 Bulletin 91/05**

(45) Mention de la délivrance du brevet :
**08.04.92 Bulletin 92/15**

(84) Etats contractants désignés :
**DE ES GB**

(56) Documents cités :
**EP-A- 0 206 896
FR-A- 2 462 602
FR-A- 2 567 239
FR-A- 2 583 497**

(73) Titulaire : **CAPRI-CODEC S.A.:Société anonyme dite
24 à 32 rue Ernest Renan
F-92707 Colombes Cédex (FR)**

(72) Inventeur : **De Vienne, Michel
73 rue Sartoris
F-92250 La Garenne Colombes (FR)**
Inventeur : **Boutteville, Claude
4, rue du Prieuré
F-78100 Saint-Germain-en-Laye (FR)**

(74) Mandataire : **Bertrand, Didier et al
c/o S.A. FEDIT-LORIOT & AUTRES CONSEILS
EN PROPRIETE INDUSTRIELLE 38, Avenue
Hoche
F-75008 Paris (FR)**

Jouve, 18, rue Saint-Denis, 75001 PARIS

**Description**

La présente invention concerne l'industrie de la petite mécanique et celle de la construction notamment électrique. Elle vise plus particulièrement les moyens de fixation d'organes, notamment de presse-étoupe, dans des parois accessibles d'un seul côté.

On connaît de tels dispositifs faisant appel à l'expansion d'un organe, après son introduction à l'état rétracté dans un trou percé dans la paroi. C'est le cas des rivets explosifs, mais aussi des écrous à épanouissement de corolle par vissage d'un élément fileté, tel celui décrit et représenté dans le brevet FR-A-2.583.496. Ces dispositifs présentent l'inconvénient de nécessiter une assez grande précision entre leurs dimensions et celles du trou, notamment pour la fixation dans une paroi, ou encore d'exercer des efforts importants sur le bord du trou pouvant entraîner des déformations ou fissures, ou bien une fragilité excessive de la paroi au voisinage du trou.

On connaît aussi des dispositifs à étrier basculant que l'on introduit dans le trou, replié parallèlement à une tige filetée, et que l'on bascule perpendiculairement à la tige de l'autre côté de la paroi traversée. Ces dispositifs nécessitent un espace libre de l'autre côté de la paroi assez important pour permettre le dégagement total de l'étrier replié nécessaire à son pivotement. La manoeuvre de bascule en aveugle n'est, de plus, pas aisée.

Le vissage direct d'un élément fileté dans un trou taraudé d'une paroi suffisamment épaisse nécessite, soit une paroi métallique ou de nature supportant le taraudage, soit la mise en place préalable d'une cheville tamponnée. Ceci ne permet pas des fixations rapides et solides dans des parois, sauf peut-être pour des vis de diamètre peu important.

L'invention a pour but la réalisation d'un dispositif de fixation dans un trou non taraudé d'une paroi simple, robuste, aisé et rapide à mettre en place, peu onéreux, et ne présentant pas les inconvénients précités des dispositifs classiques.

L'invention a pour objet un dispositif d'ancrage d'un élément fileté dans un trou lisse cylindrique de révolution de plus grand diamètre, percé dans une paroi accessible d'un seul côté, d'épaisseur inférieure au diamètre du trou, caractérisé en ce que l'élément fileté coopère avec deux butées axiales antagonistes dont l'une au moins est déplaçable longitudinalement vers l'autre par vissage sur l'élément fileté, l'une des butées, distale, étant non circulaire, de longueur dépassant radialement le trou et de largeur inférieure au diamètre du trou, l'autre butée, proximale étant circulaire et de diamètre supérieur au diamètre du trou; une rondelle élastiquement compressible axialement, enfilée sur l'élément fileté et de plus grand diamètre extérieur que le trou, étant intercalée entre les deux butées, en contact avec la butée proximale; la butée distale et/ou la rondelle comportant des moyens de centrage dans le trou.

Suivant l'application particulière envisagée, il est souvent souhaitable que la longueur de la butée distale soit supérieure au diamètre du trou, la somme de cette longueur et du diamètre de l'élément fileté étant inférieure à deux fois le diamètre du trou.

La butée distale peut visser sur l'élément fileté, la butée proximale étant constituée par un épaulement en bout du filetage de l'élément fileté.

La butée distale peut aussi être solidaire de l'extrémité de l'élément fileté, la butée proximale étant constituée par un écrou vissant sur l'élément fileté. En ce cas, la butée proximale peut être constituée par un ergot radial à l'extrémité distale de l'élément fileté et la butée proximale peut être constituée par une face d'un corps taraudé dont le dispositif permet l'ancrage dans le trou de la paroi.

Afin d'avoir une meilleure adhérence sur la face non accessible de la paroi, il est avantageux que la butée distale présente, face à la paroi, une surface de contact non lisse, les moyens de centrage ne gênant pas sa libre application sur la paroi.

La rondelle élastiquement compressible est de préférence tronconique, du type rondelle Belleville, afin d'assurer une forte résistance élastique à la compression et un contact étanche sur la paroi aussi bien que sur la butée proximale qui assure l'étanchéité de la traversée. Mais la rondelle peut aussi bien être constituée par un anneau d'élastomère dur, ou une rondelle éventail.

Dans un mode de réalisation particulier, la butée distale présente des moyens de centrage dans le trou coopérant avec des moyens complémentaires de la rondelle.

L'invention a aussi pour objet un presse-étoupe comportant un dispositif d'ancrage suivant l'invention.

L'invention pourra être plus aisément comprise par l'examen et la description détaillée des dessins annexés qui représentent quelques modes de réalisation de l'invention, choisis simplement à titre d'exemple parmi les nombreuses formes d'exécution, adaptations et variantes de l'invention accessibles à un technicien averti.

Sur ces dessins :

la figure 1 est une vue schématique, en élévation et partiellement en coupe axiale, d'un presse-étoupe fixé dans un trou d'une paroi par un dispositif d'ancrage suivant un premier mode de réalisation de l'invention;

la figure 2 est une vue suivant la flèche II de la figure 1;

les figures 3 et 4 montrent deux étapes de mise en place du presse-étoupe de la Figure 1 dans un trou de paroi;

les figures 5 à 9 sont des vues schématiques, en élévation et en coupe axiale, d'autres modes de réalisation du dispositif d'ancrage objet de l'invention;

la figure 10 est une vue schématique, en élévation et en coupe axiale d'un élément fileté ancré dans un trou d'une paroi par un dispositif d'ancrage suivant encore un autre mode de réalisation de l'invention;

la figure 11 est une vue suivant la flèche XI de la figure 10; et,

la figure 12 montre une étape de la mise en place du dispositif de la figure 10 dans un trou de paroi.

Sur ces figures, les éléments correspondants sont désignés par les mêmes références numériques, éventuellement affectées d'un indice. Les dimensions et les proportions respectives de ces éléments peuvent ne pas être respectées, pour plus de clarté des dessins.

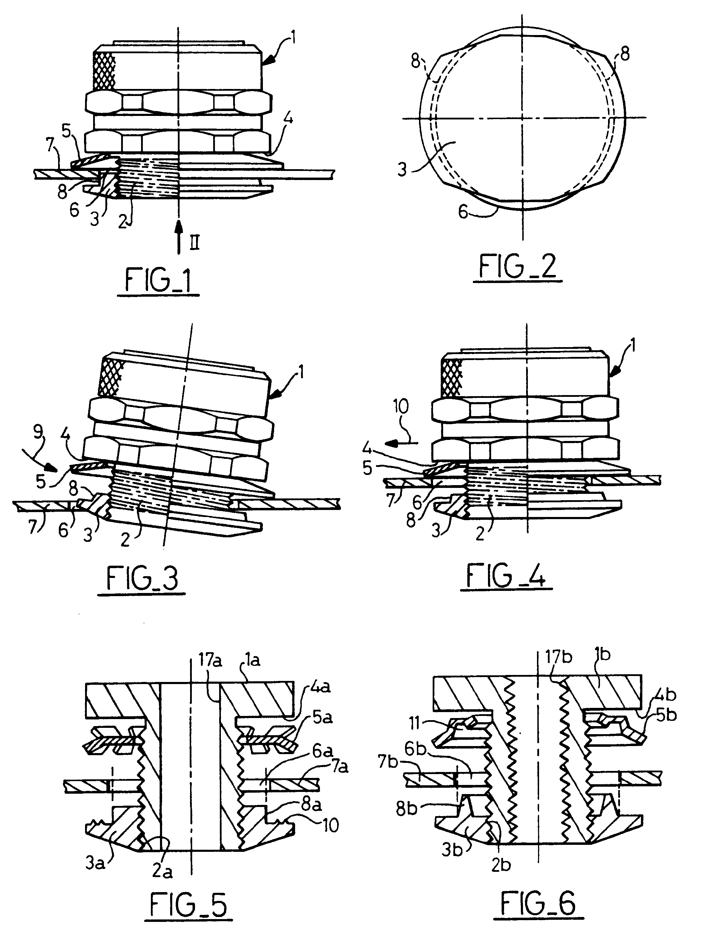

Le presse-étoupe 1 représenté sur les figures 1 à 4 comprend essentiellement un corps de presse-étoupe classique terminé par un filetage 2, sur lequel visse un écrou formant butée distale 3 de forme oblongue, visible sur la figure 2. La face terminale plate du presse-étoupe 1 forme une butée proximale 4 pour une rondelle élastique 5 tronconique, du type rondelle Belleville. Le presse-étoupe 1 est ancré et centré dans un trou lisse 6 d'une paroi 7, de diamètre supérieur à celui du filetage 2 et à la largeur de l'écrou-butée 3, mais inférieur à la longueur de l'écrou-butée 3. Le centrage de l'ensemble dans le trou 6 est assuré par un épaulement tronconique 8 en deux arcs de cercle faisant saillie de la face de l'écrou-butée 3 en regard du trou 6. La base de l'épaulement 8 a un diamètre supérieur à celui du trou 6, tandis que son sommet a un diamètre inférieur à celui du trou 6. Ainsi, lorsque le presse-étoupe 1 est ancré (figure 1) l'épaulement tronconique 8 est coincé dans le trou 6 et maintenu en place par l'effet de ressort de la rondelle 5 comprimée contre la paroi 7 par la face-butée proximale 4 du presse-étoupe 1.

Pour mettre en place le presse-étoupe 1 dans le trou 6 (figures 3-4) on commence par insérer l'écrou-butée 3 en bout du filetage 2 dans le trou 6 par un mouvement de bascule indiqué par la flèche 9 sur la figure 3, puis on effectue une translation latérale, comme indiqué par la flèche 10 sur la figure 4 jusqu'à ce que l'épaulement 8 de l'écrou-butée 3 soit centré sur le trou 6. Par une traction axiale exercée sur le corps du presse-étoupe 1, on insère l'épaulement 8 dans le trou et on visse jusqu'à blocage de la rondelle 5 entre la paroi 7 et la face-butée 4 du corps du presse-étoupe.

Dans le mode de réalisation représenté sur la figure 5, l'écrou-butée 3a allongé, de forme analogue à celui de l'écrou 3 de la figure 1, est vissé en bout du filetage 2a d'un élément fileté 1a, il présente un épaulement cylindrique 8a de diamètre légèrement inférieur à celui du trou 6a de la paroi 7a et sa face venant en appui contre la face non accessible de la paroi, présente des rugosités 10 en forme de picots qui empêchent l'écrou-butée 3a de tourner en glissant sur la paroi 7a lors du vissage et du blocage. Le centrage est assuré par l'insertion libre de l'épaulement cylindrique 8a dans le trou 6a. Dans cet exemple, la rondelle élastique est figurée sous forme d'une rondelle éventail 5a qui prend appui sur la face-butée proximale 4a de l'élément fileté la et sur la paroi 7a.

Un alésage axial 17a de l'élément fileté la permet le guidage et la protection à la traversée de la paroi de câbles, tiges ou autres organes.

La mise en place de l'écrou-butée 3a à travers le trou 6a de la paroi s'effectue de la même façon indiquée sur les figures 3 et 4 de l'exemple précédent.

Dans le mode de réalisation représenté sur la figure 6, l'écrou-butée 3b allongé de forme analogue à celle de l'écrou 3 de la figure 1 présente une nervure circulaire 8b de section trapézoïdale dont le diamètre extérieur est inférieur à celui du trou 6b, et dont la hauteur est supérieure à l'épaisseur de la paroi 7b. La rondelle élastique 3b en forme de cloche présente une rainure circulaire 11 de forme complémentaire de celle de l'extrémité de la rainure 8b, qu'elle reçoit lors du vissage du filetage 2b de l'élément fileté 1b dans l'écrou-butée 3b. On assure ainsi un double centrage dans le trou 6b, par la nervure 8b, elle-même centrée par la rainure 11 dans la rondelle 5b elle-même, centrée sur le filetage 2b.

Un taraudage axial 17b de l'élément fileté 1b permet d'y fixer, et par suite d'assujettir à la paroi 7b, tout organe désiré par filetage ou vis.

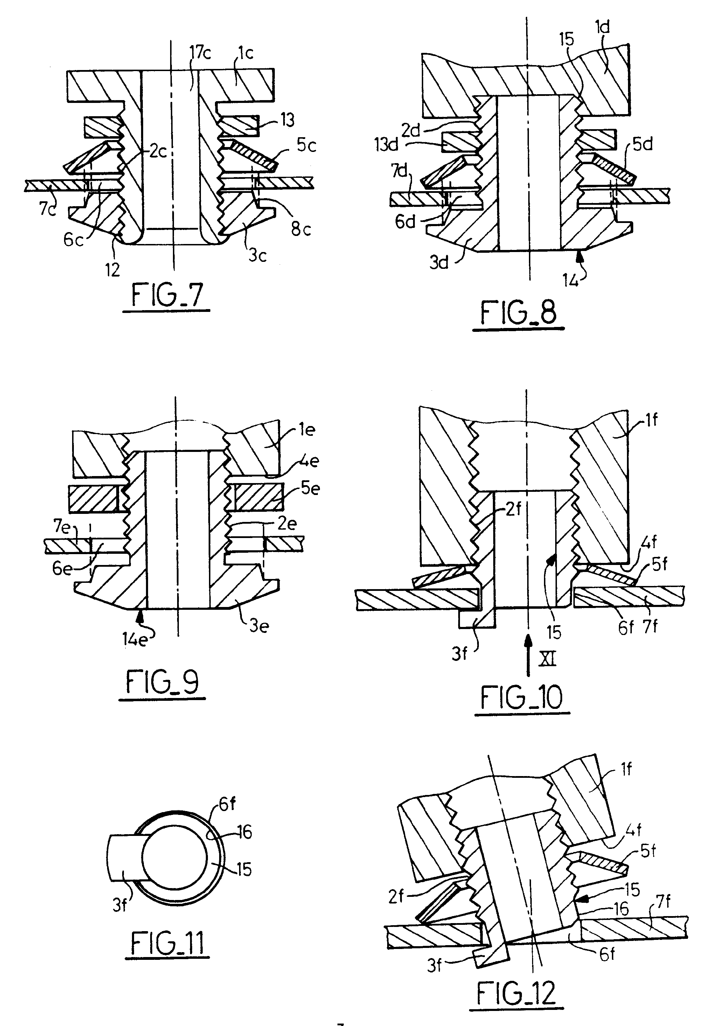

Le dispositif représenté sur la Figure 7 comprend un élément fileté 1c, analogue à celui des Figures 5 et 6, une rondelle élastique 5c et un écrou-butée 3c analogues à ceux des figures 1 à 4, mais l'écrou-butée 3c est solidarisé de l'extrémité du filetage 2c par un sertissage 12 (ou une soudure, un collage, un dudgeonnage, ou autre moyen connu). Un écrou 13 vissant sur le filetage 2c entre la rondelle 5c et l'extrémité de l'élément 1c forme une butée proximale pour la compression de la rondelle 5c contre la paroi 7c et l'ancrage de l'ensemble, centré dans le trou 6c par coincement de l'épaulement 8c de l'écrou-butée 3c dans le trou 6c.

La mise en place et le centrage de l'écrou-butée distale 3c à travers le trou 6c s'effectue comme sur les figures 3 et 4 de l'exemple précédent, mais le blocage s'effectue au moyen de l'écrou-butée proximale 13.

Dans le mode de réalisation représenté sur la figure 8, la butée distale est constituée par la face inférieure de la tête 3d, de forme analogue à celle de l'écrou 3 des figures 1 à 4, d'une vis 14 vissée-bloquée dans un trou borgne taraudé 15 d'un élément à fixer 1d. Un écrou-butée proximale 13d permet la compression d'une rondelle Belleville 5d et l'ancrage après centrage comme dans l'exemple de la figure 7.

Le dispositif représenté sur la figure 9, ne diffère de celui de la Figure 8 que par l'utilisation d'une rondelle élastique 5e cylindrique, en caoutchouc dur par exemple, et par la suppression de l'écrou-butée proxi

male 13d, l'élément à fixer le vissant librement sur la vis 14e et sa face terminale 4e constituant une butée proximale pour la compression de la rondelle 5e contre la paroi 7e après centrage dans le trou 6e.

Les figures 10,11 et 12 représentent encore un autre mode de réalisation de l'invention, dans lequel la butée distale est constituée par un ergot 3f faisant saillie radialement à une extrémité lisse 16 d'une tige filetée 15 de diamètre extérieur peu supérieur à celui du trou 6f d'une paroi 7f. L'autre extrémité de la tige filetée 15 visse librement dans un taraudage de l'élément à fixer 1f dont la face terminale constitue une butée proximale 4f pour la compression d'une rondelle "Belleville" 5f contre la paroi 7f après mise en place et centrage dans le trou 6f comme indiqué figure 12.

Dans ces divers exemples, la rondelle élastique empêche la rotation libre de la butée, dès la mise en place dans le trou, et évite ainsi à l'utilisateur d'avoir à tirer le dispositif vers lui pour commencer à visser.

## Revendications

1. Dispositif d'ancrage d'un élément fileté dans un trou lisse cylindrique de révolution de plus grand diamètre, percé dans une paroi, accessible d'un seul côté, d'épaisseur inférieure au diamètre du trou, caractérisé en ce que l'élément fileté (2) coopère avec deux butées axiales antagonistes dont l'une au moins est déplaçable longitudinalement vers l'autre par vissage sur l'élément fileté, l'une des butées, distale (3), étant non circulaire, de longueur dépassant radialement le trou (6) et de largeur inférieure au diamètre du trou, l'autre butée, proximale (4,13) étant circulaire et de diamètre supérieur au diamètre du trou; une rondelle (5) élastiquement compressible axialement, enfilée sur l'élément fileté et de plus grand diamètre extérieur que le trou, étant intercalée entre les deux butées, en contact avec la butée proximale; la butée distale et/ou la rondelle comportant des moyens de centrage (8) dans le trou.

2. Dispositif, suivant la revendication 1, caractérisé en ce que la longueur diamétrale de la butée distale (3) est supérieure au diamètre du trou, la somme de cette longueur et du diamètre de l'élément fileté (2) étant inférieure à deux fois le diamètre du trou (6).

3. Dispositif, suivant l'une des revendications 1 et 2, caractérisé en ce que la butée distale (3) visse sur l'élément fileté (2), la butée proximale (4) étant constituée par un épaulement en bout du filetage de l'élément fileté.

4. Dispositif, suivant l'une des revendications 1 et 2, caractérisé en ce que la butée distale (3c,3d,3e) est solidaire de l'extrémité de l'élément fileté (2c,2d,2e), la butée proximale étant constituée par un écrou (13) vissant sur l'élément fileté.

5. Dispositif, suivant la revendication 4, caractérisé en ce que la butée distale est constituée par un ergot radial (3f) à l'extrémité distale de l'élément fileté (2f).

6. Dispositif, suivant l'une des revendications 4 et 5, caractérisé en ce que la butée proximale est constituée par une face d'un corps taraudé (1d,1e,1f) dont le dispositif permet l'ancrage dans le trou de la paroi.

7. Dispositif, suivant l'une des revendications 1 à 6, caractérisé en ce que la butée distale (3a) présente, face à la butée proximale, une surface non lisse (10), les moyens de centrage (8a) ne gênant pas sa libre application sur la paroi.

8. Dispositif, suivant l'une quelconque des revendications 1 à 7, caractérisé en ce que la rondelle (5) est tronconique et assure l'étanchéité de la traversée.

9. Dispositif, suivant l'une des revendications 1 à 8, caractérisé en ce que la butée distale (3b) présente des moyens de centrage (8b) dans le trou coopérant avec des moyens complémentaires (11) de la rondelle (5b).

10. Presse-étoupe, caractérisé en ce qu'il comporte un dispositif d'ancrage à travers une paroi suivant l'une des revendications 1 à 9.

## Patentansprüche

1. Vorrichtung zur Verankerung eines mit einem Gewinde versehenen Elements in einem glatten, drehzylindrischen Loch mit größerem Durchmesser, das in einer Wand gebohrt ist, die nur von einer Seite zugänglich ist und deren Dicke kleiner als der Durchmesser des Lochs ist, dadurch gekennzeichnet, daß das mit Gewinde versehene Element (2) mit zwei entgegenwirkenden axialen Anschlägen zusammenwirkt, von denen mindestens einer durch Verschraubung auf dem mit Gewinde versehenen Element auf den anderen zu in Längsrichtung bewegbar ist, wobei einer der Anschläge, und zwar der entfernt gelegene (3), nicht kreisförmig ist und eine das Loch (6) radial überschreitende Länge und eine Breite hat, die kleiner als der Durchmesser des Lochs ist, und der andere Anschlag, und zwar der nahe gelegene (4, 13), kreisförmig ist und einen Durchmesser hat, der größer als der Durchmesser des Lochs ist, daß eine axial elastisch komprimierbare Scheibe (5), die auf das mit Gewinde versehene Element aufgesteckt ist und einen größeren Außendurchmesser als das Loch besitzt, zwischen die beiden Anschläge eingesetzt ist, indem sie mit dem nahe gelegenen Anschlag in Berührung ist, und daß der entfernt gelegene Anschlag und/oder die Scheibe Einrichtungen (8) zur Zentrierung in dem Loch besitzen.

2. Vorrichtung nach Anspruch 1, dadurch gekennzeichnet, daß die diametrale Länge des entfernt gelegenen Anschlags (3) größer als der Durchmesser des Lochs ist, wobei die Summe dieser Länge und des Durchmessers des mit Gewinde versehenen

4

Elements (2) kleiner als das Zweifache des Durchmessers des Lochs (6) ist.

3. Vorrichtung nach einem der Ansprüche 1 und 2, dadurch gekennzeichnet, daß der entfernt gelegene Anschlag (3) auf das mit Gewinde versehene Element (2) aufgeschraubt ist, wobei der nahe gelegene Anschlag (4) aus einer Schulter am Ende des Gewindes des mit Gewinde versehenen Elements besteht.

4. Vorrichtung nach einem der Ansprüche 1 und 2, dadurch gekennzeichnet, daß der entfernt gelegene Anschlag (3c, 3d, 3e) mit dem Ende des mit Gewinde versehenen Elements (2c, 2d, 2e) fest verbunden ist, wobei der nahe gelegene Anschlag aus einer Mutter (13) besteht, die auf das mit Gewinde versehene Element aufgeschraubt ist.

5. Vorrichtung nach Anspruch 4, dadurch gekennzeichnet, daß der entfernt gelegene Anschlag aus einer radialen Nase (3f) am entfernt gelegenen Ende des mit Gewinde versehenen Elements (2f) besteht.

6. Vorrichtung nach einem der Ansprüche 4 und 5, dadurch gekennzeichnet, daß der nahe gelegene Anschlag aus einer Fläche eines mit Innengewinde versehenen Körpers (1d, 1e, 1f) besteht, dessen Verankerung in dem Loch der Wand die Vorrichtung gestattet.

7. Vorrichtung nach einem der Ansprüche 1 bis 6, dadurch gekennzeichnet, daß der entfernt gelegene Anschlag (3a) gegenüber dem nahe gelegenen Anschlag eine nicht glatte Fläche (10) besitzt, wobei die Einrichtungen (8a) zur Zentrierung nicht sein freies Anliegen an der Wand behindern.

8. Vorrichtung nach einem der Ansprüche 1 bis 7, dadurch gekennzeichnet, daß die Scheibe (5) kegelstumpfförmig ist und die Abdichtung der Durchführung gewährleistet.

9. Vorrichtung nach einem der Ansprüche 1 bis 8, dadurch gekennzeichnet, daß der entfernt gelegene Anschlag (3b) Einrichtungen (8b) zur Zentrierung in dem Loch besitzt, die mit ergänzenden Einrichtungen (11) der Scheibe (5b) zusammenwirken.

10. Stopfbuchse, dadurch gekennzeichnet, daß sie eine Vorrichtung zur Verankerung unter Durchquerung einer Wand nach einem der Ansprüche 1 bis 9 besitzt.

**Claims**

1. Device for anchoring a threaded component in a smooth cylindrical hole which has a circumference of a larger diameter, made in a wall accessible from only one side, with a thickness less than the diameter of the hole, characterised in that the threaded component (2) interacts with two opposing axial stops, at least one of which can be moved longitudinally towards the other by screwing on the threaded component, one of the stops, the distal one (3), being non-circular, having a length passing radially beyond the hole (6) and a width less than the diameter of the hole, the other stop, the proximal one (4, 13), being circular and of a diameter greater than the diameter of the hole; a washer (5) which can be elastically compressed axially, fitted onto the threaded component and having a greater external diameter than the hole, being interposed between the two stops and in contact with the nearest stop; the distal stop and/or the washer having means for centring in the hole.

2. Device according to claim 1, characterised in that the diametral length of the distal stop (3) is greater than the diameter of the hole, the sum of this length and the diameter of the threaded component (2) being less than twice the diameter of the hole (6).

3. Device according to one of claims 1 and 2, characterised in that the distal stop (3) screws onto the threaded component (2), the proximal stop (4) consisting of a shoulder at the end of the thread on the threaded component.

4. Device according to one of claims 1 and 2, characterised in that the distal stop (3c, 3d, 3e) is integral with the end of the threaded component (2c, 2d, 2e), the proximal stop consisting of a nut (13) screwing onto the threaded component.

5. Device according to claim 4, characterised in that the distal stop consists of a radial claw (3f) at the distal end of the threaded component (2f).

6. Device according to one of claims 4 and 5, characterised in that the proximal stop consists of one face of a threaded body (1d, 1e, 1f) which has a device which allows anchoring in the hole in the wall.

7. Device according to one of claims 1 to 6, characterised in that the distal stop (3a) has, facing the proximal stop, a non-smooth surface (10), the centring means (8a) not interfering with its free application to the wall.

8. Device according to any one of claims 1 to 7, characterised in that the washer (5) is tapered and ensures the impermeability of the passage.

9. Device according to one of claims 1 to 8, characterised in that the distal stop (3b) has means of centring (8b) in the hole interacting with complementary means (11) on the washer (5b).

10. Stuffing box, characterised in that it incorporates a device for anchoring through a wall according to one of claims 1 to 9.

FIG_1

FIG_2

FIG_3

FIG_4

FIG_5

FIG_6

6

FIG_7

FIG_8

FIG_9

FIG_10

FIG_11

FIG_12